# FASCICULE DE BREVET EUROPEEN

(11) **EP 1 559 643 B1**
(45) Date de publication et mention de la délivrance du brevet: **07.06.2006**
(21) Numéro de dépôt: 05290230.1
(22) Date de dépôt: 02.02.2005
(51) Int. Cl.: B62H 5/18

(54) **Dispositif de cadenas pour disque de frein de motocyclettes**
Scheibenbremsenschloss für Motorräder
Disk brake lock for motorcycles

(30) Priorité: 02.02.2004 ES 200400216 U
(43) Date de publication de la demande: 03.08.2005
(73) Titulaire: Luma Industrias, S.A., 20120 Hernani (Guipuzcoa) (ES)
(72) Inventeur: Muerza, Alfredo c/o Luma Industries S.A., 20120 Hernani Guipuzcoa (ES)
(74) Mandataire: Intes, Didier Gérard André

(56) Documents cités:
- FR-A- 2 702 728
- FR-A- 2 705 077
- US-A- 5 916 279
- US-A1- 2003 188 938
- US-B1- 6 553 793

## Description

La présente invention concerne un dispositif de cadenas spécialement destiné à empêcher la rotation de la roue d'une motocyclette, qui se place dans le disque de frein de celle-ci de sorte que, en essayant de faire tourner la roue, il vienne buter contre des éléments du châssis.

### ÉTAT DE LA TECHNIQUE ANTERIEURE

En général, ce type de cadenas est constitué (voir par exemple le document de l'art antérieur US2003/0188938) d'un corps de blocage qui est doté d'une rainure destinée à l'insertion du disque de frein et dans laquelle, transversalement audit disque, est susceptible de pénétrer un verrou qui traverse l'un des trous habituels dudit disque de frein et est actionné par un mécanisme de serrure à clé qui est installé au sein du corps de blocage et qui possède des moyens de couverture pour couvrir l'accès pour la clé lorsqu'on n'agit pas sur la serrure.

Dans ce domaine et répondant à cette composition générale, on connaît des dispositifs dans lesquels les moyens de couverture de l'accès de la clé à la serrure (évitant l'entrée de la poussière, de la saleté, de l'eau) soit sont de constitution et d'actionnement complexes, soit s'avèrent incommodes et peu pratiques. Par conséquent, pour actionner certains moyens de couverture, comme par exemple un couvercle rabattable, il faut actuellement avoir dans une main le cadenas et avec l'autre main, généralement occupée à tenir la clé du cadenas, saisir le couvercle et le relever (l'ouvrir) jusqu'à obtenir une position dans laquelle il tienne tout seule ; on peut alors procéder à la manoeuvre de fermeture au moyen de la clé qui laisse le cadenas installé de manière opérationnelle ; dans ce cas-là, la fermeture habituelle du couvercle consiste seulement en une butée d'encastrement sans qu'il n'existe une condamnation mécanique qui bloque l'état de fermeture.

### EXPLICATION DE L'INVENTION ET AVANTAGES

Face à cet état de chose, le dispositif désormais proposé a une constitution particulière qui comprend un arbre, un couvercle rabattable ainsi qu'un ressort hélicoïdal de compression et de torsion ; l'arbre ayant un montage par insertion avec glissement axial dans le corps de blocage et, par rapport au sens de cette insertion, cet arbre possède une extrémité antérieure libre ainsi qu'une extrémité postérieure où est incorporé un bouton axial, et ce montage de l'arbre se réalise entre deux côtés, antérieur et postérieur, d'une cavité creusée dans le corps, où l'arbre a une capacité de glissement axial entre chacune des positions enfoncée et non enfoncée, ledit côté postérieur ayant un orifice qui a un ajustement coulissant par rapport au contour de l'arbre et dont le côté antérieur a une embase avec des moyens anti-rotatoires réciproques d'autres moyens existants dans ladite extrémité antérieure dudit arbre coulissant qui a, dans son alignement axial, des proéminences antérieure et postérieure telles que : la proéminence antérieure présente une rampe avant ainsi qu'une paroi arrière et est susceptible de passer largement par n'importe laquelle de deux échancrures, une première et une seconde, diamétralement opposées audit orifice ; et la proéminence postérieure est susceptible de traverser lesdites première et seconde échancrures, et présente une face antérieure ainsi qu'une extension postérieure qui est échelonnée en diminution et avec ajustement passant par rapport auxdites échancrures. Le couvercle rabattable est monté rotatif dans l'arbre coulissant avec la capacité d'adopter des positions respectives de fermeture et d'ouverture dans lesquelles l'accès de la clé à la serrure se couvre ou se découvre, ces positions étant éloignées de manière rotative d'un quart de tour entre elles et correspondant auxdites positions non enfoncée et enfoncée du bouton axial. Le couvercle rabattable possède deux paliers, antérieur et postérieur, qui sont adossés respectivement auxdits côtés de ladite cavité du corps et qui possèdent chacun un trou, antérieur et postérieur, le trou postérieur présentant deux échancrures, une première et une seconde, qui en position de fermeture du couvercle rabattable restent respectivement alignées avec les échancrures de l'orifice du côté postérieur de ladite cavité, alors que la première échancrure dudit trou postérieur et la première échancrure de l'orifice du côté postérieur restent alignées avec les proéminences antérieure et postérieure de l'arbre. Entre lesdits paliers le couvercle rabattable possède deux cloisons, antérieure et postérieure, qui sont placées radialement par rapport à l'arbre de sorte que, en position de couvercle ouvert, la proéminence postérieure reste appuyée contre le palier postérieur et, en position de couvercle fermé, cette proéminence postérieure reste dans la première échancrure du trou postérieur alors que la proéminence antérieure reste appliquée contre la face de la cloison postérieure qui regarde en direction de la cloison antérieure. Ledit ressort hélicoïdal de compression et de torsion a une extrémité ancrée dans ledit arbre et son autre extrémité est appliquée dans ladite embase du côté antérieur de ladite cavité et, à cet endroit, il présente une extension radiale qui reste appliquée à l'intérieur du couvercle et pousse dans le sens de ladite position d'ouverture de celui-ci, et qui reste confinée entre ledit palier antérieur et ladite cloison antérieure du couvercle.

Cette composition simple à base de trois pièces uniques offre un fonctionnement automatique simple et commode. La position de fermeture du couvercle rabattable est retenue contre l'impulsion de torsion élastique du ressort de compression et de torsion, car la proéminence postérieure reste au travers de la première échancrure du trou postérieur du palier postérieur et l'arbre ne peut pas tourner ; dans cette position l'arbre, et par conséquent le bouton, ne peut pas sortir parce que la proéminence antérieure reste appliquée contre la cloison postérieure du couvercle par l'action d'extension élastique du ressort ; le fait que cette proéminence antérieure soit située dans ce côté de la cloison antérieure est dû au fait qu'au cours du montage initial il s'est produit un saut élastique de la proéminence antérieure par rapport à la cloison antérieure, avec une manoeuvre qui est favorisée par la rampe avant de cette proéminence antérieure. La position d'ouverture est obtenue en appuyant simplement sur le bouton, alors, la proéminence postérieure sort de la première échancrure et l'extension axiale du ressort de compression et de torsion libère une énergie élastique de torsion stockée qui entraîne automatiquement l'ouverture du couvercle ; en relâchant le bouton la proéminence postérieure reste appuyée contre le palier postérieur et maintient la position enfoncée du bouton.

On notera que ce fonctionnement nécessite uniquement une pression réalisée avec une main de manière facile et commode pour obtenir l'ouverture du couvercle et accéder librement à la serrure du cadenas ; et pour fermer il suffit également d'actionner le couvercle jusqu'à ce qu'il atteigne sa position de fermeture dans laquelle il reste automatiquement retenu.

Ces particularités de la présente invention, ainsi que d'autres, seront exposées plus en détail dans la description suivante.

### DESSINS ET RÉFÉRENCES

Afin de mieux comprendre la nature de la présente invention, on a représenté sur les dessins ci-joints, une forme préférée de réalisation industrielle, qui tient lieu d'exemple simplement illustratif et non restrictif.
La figure 1 est une vue latérale du corps de blocage (1) installé dans un disque de frein (3), le verrou (4) traversant ce dernier.
La figure 2 est la vue en plan supérieur correspondant au corps de blocage (1) exclusivement.
La figure 3 est un agrandissement du détail III indiqué dans la figure 2.
La figure 4 est un agrandissement du détail IV indiqué dans la figure 1.
La figure 5 est une vue en perspective de l'arbre (5) avec le bouton axial (8).
La figure 6 est une vue en perspective du couvercle (6) vu d'en dessous.
La figure 7 est une vue de l'arbre (5) de la figure 5 vu frontalement, par rapport au sommet du bouton (8) de la figure 9.
La figure 8 est la vue latérale gauche qui correspond à la figure 7.
La figure 9 est la vue en plan supérieur correspondant à la figure 8 et montre le contour du bouton (8).
La figure 10 est un agrandissement du détail X indiqué dans la figure 7.
La figure 11 est la vue frontale du couvercle (6).
La figure 12 est la vue en plan inférieur correspondant à la figure 11.
La figure 13 est une représentation virtuelle éclatée des paliers antérieur (22) et postérieur (23) du couvercle rabattable (6).
La figure 14 est une vue latérale du ressort hélicoïdal de compression (7) vu perpendiculairement à l'extension radiale (30).
La figure 15 montre, après agrandissement, la vue du couvercle (6) selon la figure 11 installé dans l'arbre (5) et avec ses paliers (22, 23) sectionnés ; dans celle-ci apparaît la situation correspondant à la position de fermeture du couvercle (6),
La figure 16 est un agrandissement du détail XVI indiqué dans la figure 15.
La figure 17 est une représentation similaire à celle de la figure 15, mais montrant la position ouverte du couvercle (6) après actionnement du bouton (8).
La figure 18 est un agrandissement du détail XVIII indiqué dans la figure 17.

Dans ces figures sont indiquées les références suivantes :
1.- Corps de blocage
2.- Rainure de corps (1)
3.- Disque de frein
4.- Verrou
5.- Arbre coulissant
6.- Couvercle rabattable
7.- Ressort hélicoïdal de compression et de torsion
8.- Bouton axial
9.- Côté antérieur de cavité (11)
10.- Côté postérieur de cavité (11)
11.- Cavité du corps (1)
12.- Orifice de côté postérieur (10)
13.- Embase dans côté antérieur (9)
14.- Proéminence antérieure dans l'arbre (5)
15.- Proéminence postérieure dans l'arbre (5)
16.- Rampe avant de proéminence antérieure (14)
17.- Paroi arrière de proéminence antérieure (14)
18.- Première échancrure d'orifice (12)
19.- Seconde échancrure d'orifice (12)
20.- Face antérieure de proéminence postérieure (15)
21.- Extension postérieure de proéminence postérieure
   (15)
22.- Palier antérieur de couvercle (6)
23.- Palier postérieur de couvercle (6)
24.- Trou antérieur de palier antérieur (22)
25.- Trou postérieur de palier postérieur (23)
26.- Première échancrure de trou postérieur (25)
27.- Seconde échancrure de trou postérieur (25)
28.- Cloison antérieure de couvercle (6)
29.- Cloison postérieure de couvercle (6)
30.- Extension radiale de ressort (7)
31.- Cavité dans corps de blocage (1)

### EXPOSITION D'UNE RÉALISATION PRÉFÉRENTIELLE

Concernant les dessins et références susmentionnés, est illustré dans les plans ci-joints un mode d'exécution préférentiel de l'invention correspondant à un dispositif de blocage rotatoire pour disque de frein de motocyclettes qui répond à une composition générale qui comprend un corps de blocage (1) qui est doté d'une rainure (2) destinée à l'insertion du disque de frein (3) et dans laquelle, transversalement à celui-ci, est susceptible de pénétrer un verrou (4) qu'il traverse par l'un des trous habituels dudit disque de frein (3) et est actionné par un mécanisme de serrure de clé qui est installé au sein du corps de blocage (1) et qui possède des moyens praticables de couverture de l'accès pour la clé, lorsqu'on n'agit pas sur la serrure.

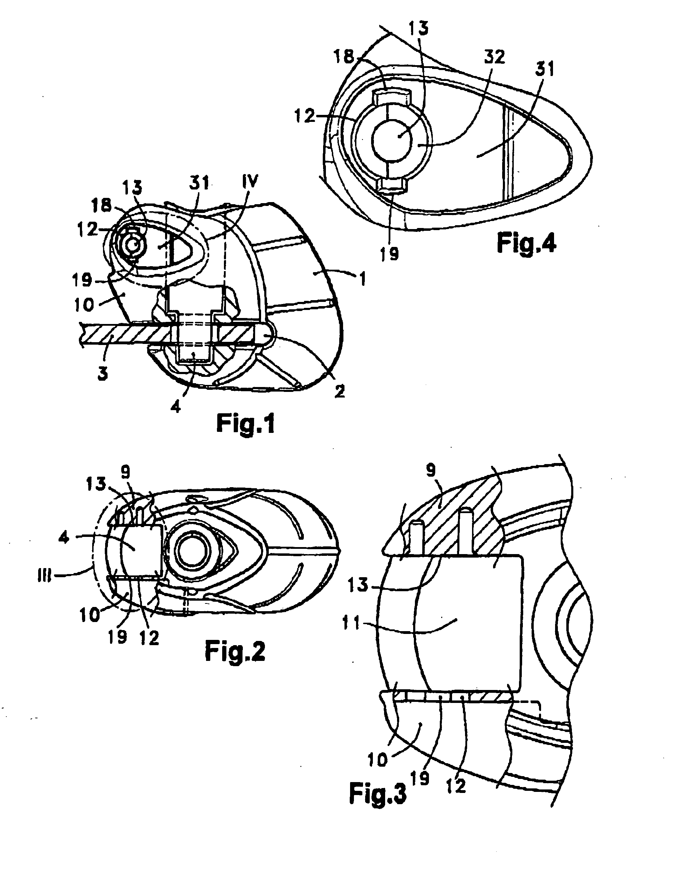

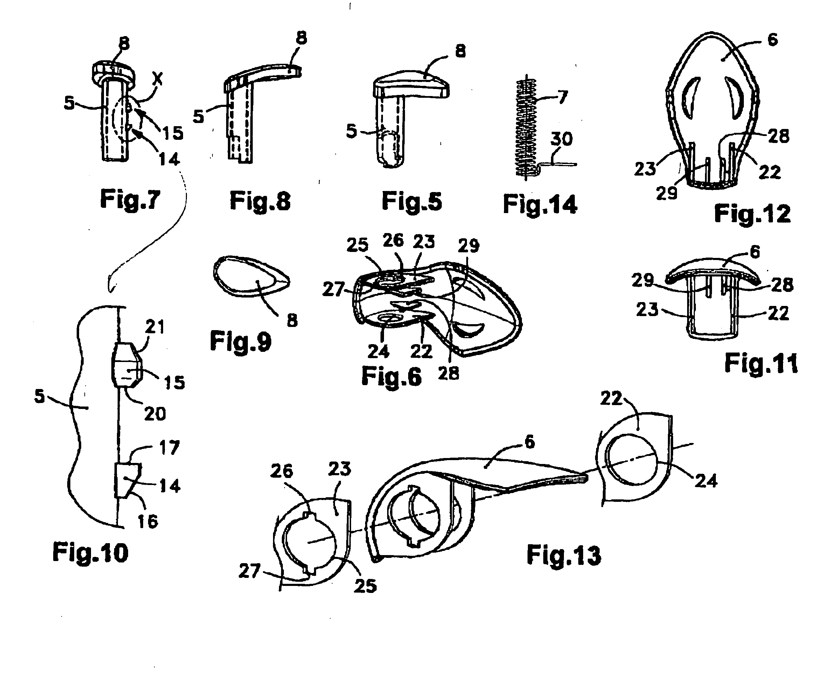

Selon la conception particulière de l'invention, ce dispositif se compose d'un arbre (5), d'un couvercle rabattable (6) ainsi que d'un ressort hélicoïdal de compression (7). Ledit arbre (5) a un montage par insertion avec glissement axial et verrouillage rotatoire dans le corps de blocage (1) et, par rapport au sens de cette insertion, cet arbre (5) possède une extrémité antérieure libre et une extrémité postérieure où est incorporé un bouton axial (8). Le montage de l'arbre (5) se réalise entre deux côtés, antérieur (9) et postérieur (10), d'une cavité (11) creusée dans le corps (1), où l'arbre (5) a une capacité de glissement axial entre chacune des positions enfoncée et non enfoncée, le côté postérieur (10) de ladite cavité ayant un orifice (12) qui a un ajustement coulissant par rapport au contour de l'arbre (5) et dont le côté antérieur (9) a une embase (13) pour ladite extrémité antérieure d'un dit arbre coulissant (5) qui a des proéminences, antérieure (14) et postérieure (15), alignées axialement et telles que la proéminence antérieure (14) présente une rampe avant (16) ainsi qu'une paroi arrière (17) et est susceptible de passer largement par n'importe laquelle de deux échancrures, une première (18) et une seconde (19), diamétralement opposées audit orifice (12); et la proéminence postérieure (15) est susceptible de traverser lesdites première (18) et seconde (19) échancrures, et présente une face antérieure (20) ainsi qu'une extension postérieure (21) qui est échelonnée en diminution et avec ajustement passant par rapport auxdites échancrures (18, 19). Ledit couvercle rabattable (6) est monté rotatif dans l'arbre coulissant (5) avec la capacité d'adopter les positions respectives de fermeture et d'ouverture dans lesquelles l'accès de la clé de la serrure est couvert ou découvert. Ces positions sont éloignées de manière rotative d'un quart de tour entre elles et correspondent auxdites positions non enfoncée et enfoncée du bouton axial (8), et le couvercle rabattable (6) possède deux paliers, antérieur (22) et postérieur (23), qui sont adossés respectivement auxdits côtés (9 et 10) de la cavité (11) du corps (1) et qui possèdent chacun un trou, antérieur (24) et postérieur (25), le trou postérieur (25) possédant deux échancrures, une première (26) et une seconde (27), qui en position de fermeture du couvercle rabattable (6) restent respectivement alignées avec les échancrures (18, 19) de l'orifice (12) du côté postérieur (10) de ladite cavité (11), alors que la première échancrure (18) et la première échancrure (26) restent alignées avec les proéminences antérieure (14) et postérieure (15) de l'arbre (5). Entre lesdits paliers (22, 23) le couvercle rabattable (6) possède deux cloisons, antérieure (28) et postérieure (29), qui sont placées radialement par rapport à l'arbre (5) de sorte que, en position de couvercle (6) ouvert, la proéminence postérieure (15) reste appuyée contre le palier postérieur (23) et, en position de couvercle (6) fermé, cette proéminence postérieure (15) reste au travers de la première échancrure (26) du trou postérieur (25) alors que la proéminence antérieure (14) reste appliquée contre la face de la cloison postérieure (29) qui regarde en direction de la cloison antérieure (28), et ledit ressort hélicoïdal de compression et de torsion (7) a une extrémité ancrée dans ledit arbre (5) et son autre extrémité est appliquée dans ladite embase (13) du côté antérieur (9) de ladite cavité (11), où elle présente une extension radiale (30) qui reste appliquée à l'intérieur du couvercle (6) poussant ladite position d'ouverture de celui-ci et restant confinée entre ledit palier antérieur (22) et ladite cloison antérieure (28) du couvercle (6). La composition du corps de blocage (1) est illustrée dans les figures 1 à 4 ; celle de l'arbre (5) avec bouton (8), au moyen des figures 5 et 7 à 10 ; celle du couvercle (6), au moyen des figures 6 et 11 à 13, et celle du ressort hélicoïdal de compression et de torsion (7), au moyen de la figure 14.

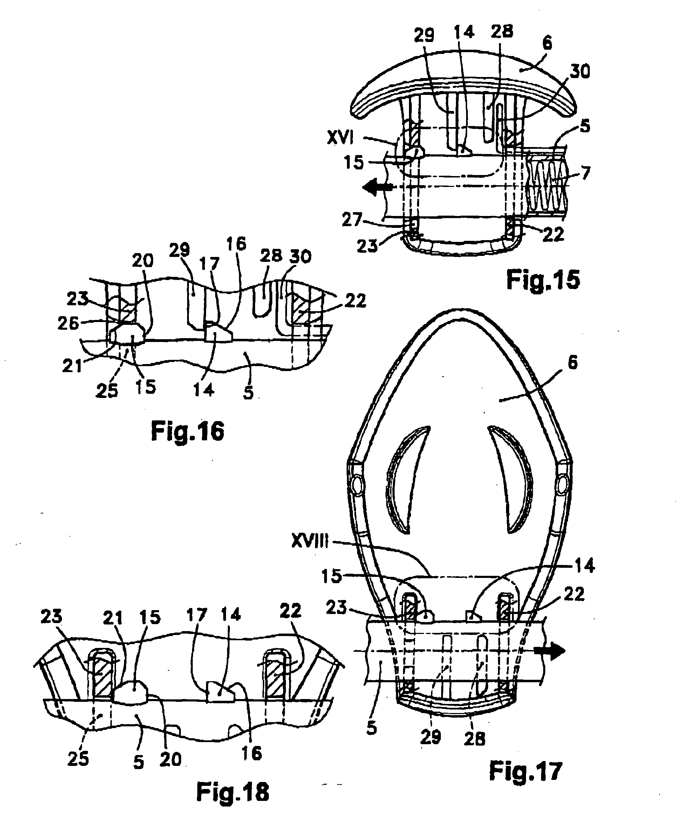

La fonctionnalité du dispositif est illustrée au moyen des figures 15 à 18, en conjonction avec les précédentes. Les figures 15 et 16 se réfèrent à la position de couvercle (6) fermé ; dans cette position, le ressort (7) pousse dans le sens de la flèche, de sorte que l'extension postérieure (21) de la proéminence postérieure (15) reste emboîtée dans la première échancrure (26) du trou postérieur (25) du palier postérieur (23) et la paroi arrière (17) de la proéminence antérieure (14) bute contre la cloison postérieure (29). Les figures 17 et 18 se réfèrent à la position de couvercle (6) ouvert ; cette position est obtenue en appuyant sur le bouton (8) dans le sens indiqué par la flèche, ce qui comprime le ressort (7) jusqu'à ce que ladite proéminence postérieure (15) sorte de la première échancrure (26) et le couvercle (6) s'ouvre entraîné par l'extension radiale dudit ressort de compression et de torsion (7). Pour fermer le couvercle (6) il suffit d'appuyer dessus pour que, par extension élastique axiale du ressort (7), de nouveau ladite proéminence postérieure (15) pénètre dans l'échancrure (26) et la condamnation mécanique de la fermeture du couvercle reste établie (6) ; dans cette manoeuvre l'extension postérieure (21) de la proéminence postérieure (15) facilite le rapprochement dans l'échancrure (26). La rampe, arrière (16) de la proéminence antérieure (14) a pour unique but de faciliter le saut élastique afin de dépasser la cloison postérieure (29) au cours de l'opération initiale de montage de l'arbre (5) dans le corps (1). Et cette cloison antérieure (28) a pour but de retenir l'extension radiale (30) du ressort (7) entre lui-même et le palier antérieur (22) du couvercle (6).

Comme cela a été dit précédemment ce fonctionnement nécessite uniquement des actions simples, rapides et commodes d'appui qui déterminent automatiquement les positions stables de fermeture et d'ouverture, permettant de libérer les deux mains pour actionner la clé et offrant une fermeture fiable indépendante de l'action du ressort (7).

La première échancrure (18) de l'orifice (12) du côté postérieur (10) de l'cavité (11) du corps (1) est destinée à permettre le passage des proéminences antérieure (14) et postérieure (15).

La seconde échancrure (19) dudit orifice (12) ainsi que la seconde échancrure (27) du trou postérieur (25) du palier postérieur (23) du couvercle (6), servent à faciliter le montage initial, l'arbre (5) étant tourné à 90° dans le sens inverse de celui de l'ouverture du couvercle (6) pour que lesdites proéminences (14, 15) n'entrent pas en contact avec les cloisons antérieure (28) et postérieure (29) de celui-ci, excepté le saut élastique cité entre la proéminence antérieure (14) et la cloison antérieure (28).

Selon une autre particularité de l'invention, l'arbre (5) inclut des moyens anti-rotatoires consistant en un bouton (8) avec une configuration étendue en forme de larme qui se situe et joue opérationnellement dans une cavité (31) formée dans le corps de blocage (1).

Comme l'on peut le constater dans la figure 15, ledit arbre (5) est creux et ledit ressort de compression et de torsion (7) est installé à l'intérieur creux de l'arbre (5), où se trouve toujours son extrémité ancrée et où son autre extrémité reste appliquée sur la partie de l'embase (13) entourée par la couronne moulée dans celle-ci.

## Revendications

1. Dispositif de cadenas de blocage rotatoire pour disque de frein de motocyclettes, comprenant un corps de blocage (1) qui est doté d'une rainure (2) destinée à l'insertion d'un disque de frein (3) et dans laquelle, transversalement audit disque, est susceptible de pénétrer un verrou (4) qui traverse l'un des trous habituels dudit disque de frein (3) et est actionné par un mécanisme de serrure à clé qui est installé au sein du corps de blocage (1) et qui possède des moyens praticables de couverture pour couvrir l'accès pour la clé, lorsqu'on n'agit pas sur la serrure, **caractérisé par le fait qu'**il se compose d'un arbre (5), d'un couvercle rabattable (6) ainsi que d'un ressort hélicoïdal de compression et de torsion (7); ledit arbre (5) a un montage par insertion avec glissement axial et verrouillage rotatoire dans le corps de blocage (1) et, par rapport au sens de cette insertion, cet arbre (5) possède une extrémité antérieure libre et une extrémité postérieure où est incorporé un bouton axial (8); le montage de l'arbre (5) se réalise entre deux côtés, antérieur (9) et postérieur (10), d'une cavité (11) creusée dans le corps (1), où l'arbre (5) a une capacité de glissement axial entre chacune des positions enfoncée et non enfoncée; ledit côté postérieur (10) a un orifice (12) qui a un ajustement coulissant par rapport au contour de l'arbre (5) et dont le côté antérieur (9) a une embase (13) pour ladite extrémité antérieure dudit arbre coulissant (5) qui a, dans son alignement axial, des proéminences antérieure (14) et postérieure (15), telles que la proéminence antérieure (14) présente une rampe avant (16) ainsi qu'une paroi arrière (17) et est susceptible de passer largement par n'importe laquelle de deux échancrures, une première (18) et une seconde (19), diamétralement opposées audit orifice (12), et la proéminence postérieure (15) est susceptible de traverser lesdites première (18) et seconde (19) échancrures, et présente une face antérieure (20) ainsi qu'une extension postérieure (21) qui est échelonnée en diminution et avec ajustement passant par rapport auxdites échancrures (18, 19); ledit couvercle rabattable (6) est monté rotatif sur l'arbre coulissant (5) avec la capacité d'adopter des positions respectives de fermeture et d'ouverture dans lesquelles l'accès de la clé de la serrure est couvert ou découvert, ces positions étant éloignées de manière rotative d'un quart de tour entre elles et correspondant auxdites positions non enfoncée et enfoncée du bouton axial (8), et ce couvercle rabattable (6) possède deux paliers, antérieur (22) et postérieur (23), qui sont adossés respectivement auxdits côtés (9 et 10) de la cavité (11) du corps (1) et qui possèdent chacun un trou, antérieur (24) et postérieur (25), le trou postérieur (25) présentant deux échancrures, une première (26) et une seconde (27), qui en position de fermeture du couvercle rabattable (6) sont respectivement alignées avec les échancrures (18, 19) de l'orifice (12) du côté postérieur (10) de ladite cavité (11), alors que la première échancrure (18) dudit orifice et la première échancrure (26) dudit trou postérieur restent alignées avec les proéminences antérieure (14) et postérieure (15) de l'arbre (5); et entre lesdits paliers (22, 23) le couvercle rabattable (6) possède deux cloisons, antérieure (28) et postérieure (29), qui sont placées radialement par rapport à l'arbre (5) de sorte que, en position de couvercle (6) ouvert, la proéminence postérieure (15) reste appuyée contre le palier postérieur (23) et, en position de couvercle (6) fermé, cette proéminence postérieure (15) reste au travers de la première échancrure (26) du trou postérieur (25) alors que la proéminence antérieure (14) reste appliquée contre la face de la cloison postérieure (29) qui regarde en direction de la cloison antérieure (28); et ledit ressort hélicoïdal de compression et de torsion (7) a une extrémité ancrée dans ledit arbre (5) et son autre extrémité est appliquée dans ladite embase (13) du côté antérieur (9) de la cavité (11) où il présente une extension radiale (30) qui reste appliquée à l'intérieur du couvercle (6) en poussant vers ladite position d'ouverture de celui-ci et en restant confinée entre ledit palier antérieur (22) et ladite cloison antérieure (28) du couvercle (6).

2. Dispositif de cadenas de blocage rotatoire pour disque de frein de motocyclettes, selon la revendication précédente, **caractérisé en ce que** ladite embase (13) pour l'extrémité antérieure de l'arbre (5) est un creux en forme de couronne, pratiqué dans le côté antérieur (9).

3. Dispositif de cadenas de blocage rotatoire pour disque de frein de motocyclettes, selon les revendications précédentes, **caractérisé en ce que** ledit arbre (5) est creux.

4. Dispositif de cadenas de blocage rotatoire pour disque de frein de motocyclettes, selon la revendication 3, **caractérisé en ce que** ledit ressort de compression et de torsion (7) est installé dans l'intérieur creux de l'arbre (5), où son extrémité ancrée reste placée et où son autre extrémité reste appliquée sur la partie de l'embase (13) entourée par la couronne moulée dans celle-ci.

5. Dispositif de cadenas de blocage rotatoire pour disque de frein de motocyclettes, selon les revendications précédentes, **caractérisé en ce que** ledit arbre (5) inclut des moyens anti-rotatoires.

6. Dispositif de cadenas de blocage rotatoire pour disque de frein de motocyclettes, selon la revendication 5, **caractérisé en ce que** lesdits moyens anti-rotatoires de l'arbre (5) consistent en un bouton (8) avec une configuration étendue en forme de larme qui se situe et joue opérationnellement dans une cavité (31) formée dans le corps de blocage (1).

## Claims

1. Rotary clamping padlock device for motor cycle brake disc, comprising a clamping body (1) that is provided with a groove (2) intended for the insertion of a brake disc (3) and into which, transversely to said disc, a bolt (4) is capable of penetrating, said bolt passing through one of the usual holes of said brake disc (3) and being actuated by a key lock mechanism that is installed within the clamping body (1) and that has practicable cover means for covering the access for the key, when the lock is not being operated, **characterised by** the fact that it is composed of a shaft (5), a folding lid (6) and also a helical compression and torsion spring (7); said shaft (5) has an insertion-type mounting with axial sliding and rotary locking in the clamping body (1) and, relative to the direction of this insertion, this shaft (5) has a free front end and a rear end into which an axial button (8) is incorporated; the shaft (5) is mounted between two sides, front (9) and rear (10), of a cavity (11) hollowed out from the body (1), where the shaft (5) has a capacity of axial sliding between each of the driven-in and non-driven-in positions; said rear side (10) has an orifice (12) that has a sliding adjustment with respect to the contour of the shaft (5) and the front side (9) of which has a base plate (13) for said front end of said sliding shaft (5), which has, in its axial alignment, front (14) and rear (15) protuberances, such that the front protuberance (14) has a front ramp (16) as well as a back wall (17) and is capable of passing easily through either of two notches, a first (18) and a second (19) one, diametrically opposite to said orifice (12), and the rear protuberance (15) is capable of passing through said first (18) and second (19) notches, and has a front face (20) as well as a rear extension (21) that is stepped downwards and with adjustment passing relative to said notches (18, 19); said folding lid (6) is mounted in a rotary fashion on the sliding shaft (5) with the capacity to adopt respective closed and open positions in which the access of the key of the lock is covered or uncovered, these positions being a quarter turn in rotation apart and corresponding to said non-driven-in and driven-in positions of the axial button (8), and this folding lid (6) has two bearings, front (22) and rear (23), which are back-to-back with said sides (9 and 10) respectively of the cavity (11) of the body (1) and which each have a front (24) and rear (25) hole, the rear hole (25) having two notches, a first (26) and a second (27) one, which, when the folding lid (6) is in the closed position, are aligned respectively with the notches (18, 19) of the orifice (12) on the rear side (10) of said cavity (11), while the first notch (18) of said orifice and the first notch (26) of said rear hole remain aligned with the front (14) and rear (15) protuberances of the shaft (5); and between said bearings (22, 23) the folding lid (6) has two partitions, front (28) and rear (29), which are placed radially with respect to the shaft (5) so that, when the lid (6) is in the open position, the rear protuberance (15) remains pressed against the rear bearing (23) and, when the lid (6) is in the closed position, this rear protuberance (15) still passes through the first notch (26) of the rear hole (25) while the front protuberance (14) remains applied against the face of the rear partition (29) which faces the front partition (28); and said helical compression and torsion spring (7) has one end anchored in said shaft (5) and its other end is applied within said base plate (13) of the front side (9) of the cavity (11) where it has a radial extension (30) that remains applied inside the lid (6) while pushing towards said open position of said lid and while remaining confined between said front bearing (22) and said front partition (28) of the lid (6).

2. Rotary clamping padlock device for a motor cycle brake disc, according to the preceding claim, **characterised in that** said base plate (13) for the front end of the shaft (5) is a crown-shaped hollow, made in the front side (9).

3. Rotary clamping padlock device for a motor cycle brake disc, according to the preceding claims, **characterised in that** said shaft (5) is hollow.

4. Rotary clamping padlock device for a motor cycle brake disc, according to Claim 3, **characterised in that** said compression and torsion spring (7) is installed in the hollow interior of the shaft (5), where its anchored end remains positioned and where its other end remains applied on the portion of the base plate (13) surrounded by the crown moulded in the aforementioned.

5. Rotary clamping padlock device for a motor cycle brake disc, according to the preceding claims, **characterised in that** said shaft (5) includes anti-rotation means.

6. Rotary clamping padlock device for a motor cycle brake disc, according to Claim 5, **characterised in that** said anti-rotation means of the shaft (5) consist of a button (8) with an extended, tear-shaped configuration, which is located and operates within a cavity (31) formed in the clamping body (1).

## Patentansprüche

1. Motorradscheibenbremsenschloss, mit einem Sperrkörper (1), welcher mit einer Nut (2) versehen ist, die zum Einführen einer Bremsscheibe (3) bestimmt ist und in die quer zu der Bremsscheibe ein Riegel (4) einzudringen vermag, der eines der üblichen Löcher der Bremsscheibe (3) durchquert und durch einen Schlüsselschließmechanismus betätigt wird, der in dem Sperrkörper (1) angebracht ist und bedienbare Abdeckmittel besitzt, um den Zugang für den Schlüssel zu verdecken, wenn das Schloss nicht betätigt wird,
**dadurch gekennzeichnet, dass** es eine Welle (5), einen Klappdeckel (6) sowie eine Schraubendruck- und Torsionsfeder (7) umfasst, wobei die Welle (5) in dem Sperrkörper (1) durch axiales Einschieben und Drehverriegelung montiert ist und bezogen auf die Einführrichtung ein freies vorderes Ende und ein hinteres Ende besitzt, an dem ein axialer Knopf (8) eingefügt ist, wobei die Montage der Welle (5) zwischen zwei Seiten, einer vorderen (9) und einer hinteren (10), einer in dem Körper (1) ausgebildeten Höhlung (11) erfolgt, wo die Welle (5) jeweils zwischen einer eingedrückten und einer nicht eingedrückten Position axial zu gleiten vermag, wobei die hintere Seite (10) eine Öffnung (12) aufweist, die in Bezug auf die Kontur der Welle (5) eine Gleitpassung hat, und die vordere Seite (9) eine Auflage (13) für das vordere Ende der Gleitwelle (5) aufweist, die in ihrer axialen Flucht einen vorderen (14) und einen hinteren (15) Vorsprung hat, derart, dass der vordere Vorsprung (14) eine vordere Schräge (16) sowie eine rückwärtige Wand (17) aufweist und irgendeine der beiden Aussparungen, eine erste (18) bzw. eine zweite (19), mühelos zu passieren vermag, die der Öffnung (12) diametral gegenüberliegen, und der hintere Vorsprung (15) die erste (18) und die zweite (19) Aussparung zu durchqueren vermag und eine Vorderseite (20) sowie eine hintere Verlängerung (21) aufweist, die sich verjüngend und bezüglich der Aussparungen (18, 19) mit Durchgangspassung abgestuft ist, wobei der Klappdeckel (6) auf der Gleitwelle (5) drehbar montiert ist und eine geschlossene bzw. eine geöffnete Stellung einzunehmen vermag, in der der Zugang für Schlüssel des Schlosses verdeckt ist bzw. freiliegt, wobei diese Stellungen durch Drehen um eine Vierteldrehung voneinander abweichen und der nicht eingedrückten bzw. der eingedrückten Position des axialen Knopfs (8) entsprechen, und der Klappdeckel (6) zwei Lager besitzt, ein vorderes (22) und ein hinteres (23), die jeweils an den Seiten (9 und 10) der Höhlung (11) des Körpers (1) anliegen und ein vorderes (24) bzw. ein hinteres (25) Loch besitzen, wobei das hintere Loch (25) zwei Aussparungen aufweist, eine erste (26) und eine zweite (27), die in geschlossener Stellung des Klappdeckels (6) jeweils mit den Aussparungen (18, 19) der Öffnung (12) der hinteren Seite (10) der Höhlung (11) fluchtend angeordnet sind, während die erste Aussparung (18) der Öffnung und die erste Aussparung (26) des hinteren Lochs mit dem vorderen (14) und dem hinteren (15) Vorsprung der Welle (5) fluchtend angeordnet bleiben, und wobei der Klappdeckel (6) zwischen den Lagern (22, 23) zwei Trennwände besitzt, eine vordere (28) und eine hintere (29), die bezüglich der Welle (5) radial angeordnet sind, derart, dass der hintere Vorsprung (15) bei geöffnetem Deckel (6) in Anlage am hinteren Lager (23) verbleibt und der hintere Vorsprung (15) bei geschlossenem Deckel durchgehend in der ersten Aussparung (26) des hinteren Lochs (25) verbleibt, während der vordere Vorsprung (14) an der Seite der hinteren Trennwand (29), die zur vorderen Trennwand (28) gewandt ist, in Anlage bleibt, und wobei die Schraubendruck- und Torsionsfeder (7) ein In der Welle (5) verankertes Ende hat, und ihr anderes Ende an der Auflage (13) der vorderen Seite (9) der Höhlung (11) anliegt, wo sie eine radiale Erweiterung (30) aufweist, die innen im Deckel (6) in Anlage bleibt und hierbei in Richtung der geöffneten Deckelstellung drückt und zwischen dem vorderen Lager (22) und der vorderen Trennwand (28) des Deckels (6) eingeschlossen bleibt.

2. Motorradscheibenbremsenschloss nach dem vorhergehenden Anspruch,
**dadurch gekennzeichnet, dass** die Auflage (13) für das vordere Ende der Welle (5) eine kreisringförmige Vertiefung ist, die in der vorderen Seite (9) ausgebildet ist.

3. Motorradscheibenbremsenschloss nach den vorhergehenden Ansprüchen,
**dadurch gekennzeichnet, dass** die Welle (5) hohl ist.

4. Motorradscheibenbremsenschloss nach Anspruch 3,
**dadurch gekennzeichnet, dass** die Druck- und Torsionsfeder (7) im hohlen Innenraum der Welle (5) angebracht ist, wo ihr verankertes Ende platziert bleibt und wo ihr anderes Ende an dem Teil der Auflage (13) in Anlage bleibt, das von dem darin ausgebildeten Kreisring umgeben ist.

5. Motorradscheibenbremsenschloss nach den vorhergehenden Ansprüchen,
**dadurch gekennzeichnet, dass** die Welle (5) drehsperrende Mittel umfasst.

6. Motorradscheibenbremsenschloss nach Anspruch 5,
**dadurch gekennzeichnet, dass** die drehsperrenden Mittel der Welle (5) aus einem Knopf (8) mit einer gestreckten, tropfenförmigen Ausbildung bestehen, der in einer in dem Sperrkörper (1) ausgebildeten Höhlung (31) betriebsbereit mit Spiel angeordnet ist.
